**Europäisches Patentamt**

**European Patent Office**

**Office européen des brevets**

(19)

(11) Veröffentlichungsnummer: **0 003 816**
**B1**

(12) **EUROPÄISCHE PATENTSCHRIFT**

(45) Veröffentlichungstag der Patentschrift: **17.06.81**

(21) Anmeldenummer: **79100476.5**

(22) Anmeldetag: **19.02.79**

(51) Int. Cl.³: **E 21 B 10/36, B 23 B 51/00**

54 Gesteinsbohrwerkzeug.

(30) Priorität: **20.02.78 DE 2807156**

(43) Veröffentlichungstag der Anmeldung:
**05.09.79 Patentblatt 79/18**

(45) Bekanntmachung des Hinweises auf die Patenterteilung:
**17.06.81 Patentblatt 81/24**

(84) Benannte Vertragsstaaten:
**BE CH FR GB NL SE**

(56) Entgegenhaltungen:
**CH - A - 436 926**
**DE - A - 2 414 354**
**DE - A - 2 645 693**
**DE - C - 914 723**
**DE - U - 7 026 751**
**DE - U - 7 040 363**
**US - A - 2 803 153**
**US - A - 3 145 789**

**WERKSTATT UND BETRIEB, 106, Heft 11, 1973**
**H. CH. AUGUSTESEN u.a.**
**"Ejektor-Bohren auf NC.Drehmaschinen"**
**\*Seiten 861 bis 863, Bild 1 \***

(73) Patentinhaber: **Gebrüder Heller**
**Verwaltungsgesellschaft mit beschränkter**
**Haftung**
**Uphuser Heerstrasse 102**
**D-2807 Achim-Uphusen (DE)**

(72) Erfinder: **Kleine, Werner**
**An der Marsch 29**
**D-2807 Achim (DE)**

(74) Vertreter: **Bartels, Hans et al,**
**Bartels, Brandes, Held, Wolff Patentanwälte**
**Lange Strasse 51**
**D-7000 Stuttgart 1 (DE)**

EP 0 003 816 B1

### Gesteinsbohrwerkzeug

Die Erfindung betrifft ein Gesteinsbohrwerkzeug mit den im Oberbegriff des Anspruchs 1 angeführten Merkmalen.

Gesteinsbohrwerkzeuge dieser Art sind durch die DE—OS 24 14 354 bekannt und werden Kreuzschlagbohrer genannt. Bei diesen bekannten Kreuzschlagbohrern weist der Träger radial vorstehende Arme auf, an deren Enden die weiteren Schneidkörper angeordnet sind. In der Regel sind hierbei die Schneidkörper in radialem Abstand von dem Zentrierzapfen angeordnet. Der beim Bohren hierbei weder von dem Schneidkörper am freien Ende des Zentrierzapfens noch von den weiteren Schneidkörpern zerkleinerte Ring wird durch das Aufschlagen der von den Trägerarmen gebildeten Schultern zertrümmert. Das hierbei anfallende zum Teil sehr grobkörnige Bohrmehl tritt teilweise in die Zwischenräume zwischen den Trägerarmen, so daß es beim Bohren in einer Decke durch diese Zwischenräume nach unten in das Gesicht der die Bohrmaschine haltenden Person fällt. Beim Bohren in einer nach unten gerichteten Richtung kann dieses grobkörnige Bohrmehl allmählich zu einer Verstopfung führen. Das am inneren Ende der Bohrung liegenbleibende Bohrmehl dämpft außerdem den Aufschlag des Bohrwerkzeuges, so daß dadurch die Bohrleistung beeinträchtigt wird. Auch ist die Herstellung des mit radial vorstehenden Armen versehenen Trägers verhältnismäßig aufwendig.

Der Erfindung liegt die Aufgabe zugrunde, ein Gesteinsbohrwerkzeug mit um einen Zentrierzapfen angeordneten Schneidkörpern zu schaffen, das einfacher herstellbar ist und eine bessere Bohrleistung aufweist als die bekannten Kreuzschlagbohrer und durch das beim Bohren die die Bohrarbeit ausführende Person nicht vom Bohrmehl belästigt wird.

Diese Aufgabe ist gemäß der Erfindung durch das Gesteinsbohrwerkzeug gemäß dem Anspruch 1 gelöst. Dadurch, daß der Träger für die weiteren Schneidkörper eine kreisförmig begrenzte Stirnfläche aufweist, entsteht beim Bohren zwischen dem Träger und der Bohrungswand lediglich ein sehr enger Schlitz. Erst dieser enge Schlitz macht es sinnvoll, beim Werkzeugkörper einen Absaugkanal zum Absaugen des Bohrmehls vorzusehen, da dadurch gewährleistet ist, daß die beim Absaugen entstehende Luftströmung in dem engen Schlitz eine ausreichende Geschwindigkeit besitzt, um zu verhindern, daß Bohrmehl in diesen Schlitz eintritt. Durch diese Ausbildung des Trägers wird gleichzeitig erreicht, daß die ganze, der Spitze der Zentrierzapfens zugekehrte Stirnfläche zum Zertrümmern des Bohrmehls beiträgt, so daß gewährleistet ist, daß das Bohrmehl so fein zertrümmert wird, daß es in vollem Umfang durch den Absaugkanal abgesaugt werden kann. Durch die ständige Absaugung des Bohrmehls wird darüber hinaus erreicht, daß die feinen Bohrmehlbestandteile nicht ein Polster bilden können, das bei dem bekannten Kreuzschlagbohrer beim Bohren nach unten die Schlagenergie des Kreuzschlagbohrers dämpft. Auch wird durch den Absaugvorgang das feine bohrmehl beim Gesteinsbohrwerkzeug gemäß der Erfindung in jedem Fall schneller abgeführt als bei dem bekannten Kreuzschlagbohrer, so daß sich insgesamt eine wesentlich bessere Bohrleistung ergibt. Zur Bildung der kreisförmig begrenzten Stirnfläche kann der Werkzeugkörper als runde Scheibe ausgebildet sein, wodurch der Herstellungsaufwand gegenüber den bekannten Kreuzschlagbohrern wesentlich verringert wird. Auch wird durch die kreisförmig begrenzte und damit geschlossene Stirnfläche die Festigkeit des erfindungsgemäßen Gesteinsbohrwerkzeuges wesentlich erhöht, so daß er bei gleicher Festigkeit wie ein Kreuzbohrwerkzeug mit geringerem Gewicht herstellbar ist, wodurch die Übertragung der Schlagenergie verbessert wird, was wiederum zur Steigerung der Bohrleistung beiträgt.

Durch die US—PS 3 145 789 ist ein Gesteinsbohrer bekannt, der auch einen Zentrierzapfen und einen Träger mit radial vorstehenden Armen für weitere Schneidkörper aufweist, die in axialem Abstand hinter der Spitze des Zentrierzapfens um diesen herum angeordnet sind. Bei diesem Gesteinsbohrer stehen die radial äußeren Enden der Schneidkörper nicht radial nach außen über dem Träger vor. Im Werkzeugkörper dieses bekannten Gesteinsbohrers sind Kanäle vorgesehen, die jedoch als Blaskanäle für Luft und Spülflüssigkeiten dienen und zur Absaugung sinnlos wären, weil wegen der großen Zwischenräume zwischen den Armen des Trägers keine ausreichende Saugkraft erzeugt werden könnte.

Um die oben genannten Vorteile optimal ausnutzen zu können, ist bei einer vorteilhaften Ausführungsform der Erfindung die Stirnfläche des Trägers im wesentlichen eben. Um jedoch hierbei das Entstehen von Rissen durch beim Nachschleifen der Schneidkörper verursachte Schleifspuren zu vermeiden, kann in der Stirnfläche des Trägers zwischen dem Zentrierzapfen und den Schneidkörpern eine umlaufende Ringnut vorhanden sein.

Die den Absaugkanal mit der Bohrstelle verbindende Mündungsöffnung der Absaugkanals kann auf der der Spitze des Zentrierzapfens zugekehrten Seite des Werkzeugkörpers an einer beliebigen Stelle angeordnet sein. Bei der bevorzugten Ausführungsform der Erfindung ist die Mündungsöffnung im freien Ende des Zentrierzapfens und in einem axialen Abstand von den Schneiden der am Träger befestigten Schneidkörper angeordnet. Dadurch wird erreicht, daß das Bohrmehl an der Spitze des Zentrierzapfens sicher abgesaugt wird und daß der Zwischenraum zwischen dem Zentrierzapfen und der von diesem erzeugten Bohrung durch den Überstand des an der Spitze des Zentrierzapfens befestigten Schneidkörpers über einer zylindrischen Umfangsfläche des Zentrierzapfens so eng ausgebildet werden kann, daß die Mündungsöffnung des Absaugkanals nur von Bohrkleinpartikeln erreicht werden kann, die ohne Verstopfungsgefahr in die Mündungsöffnung des Absaugkanals eingesaugt werden können.

Weitere vorteilhafte Merkmale sind in den Ansprüchen und in der folgenden Beschreibung von Ausführungsbeispielen angegeben, die die Erfindung anhand der Zeichnung im einzelnen erläutert.

Es zeigen:

Fig. 1 einen Axialschnitt eines ersten Ausführungsbeispiels, wobei eine Modifikation desselben gestrichelt angedeutet ist;

Fig. 2 eine von der Spitze des Zentrierzapfens aus gesehene Stirnansicht des Ausführungsbeispieles nach Fig. 1;

Fig. 3 einen der Fig. 1 entsprechenden Schnitt eines Zweiten Ausführungsbeispieles.

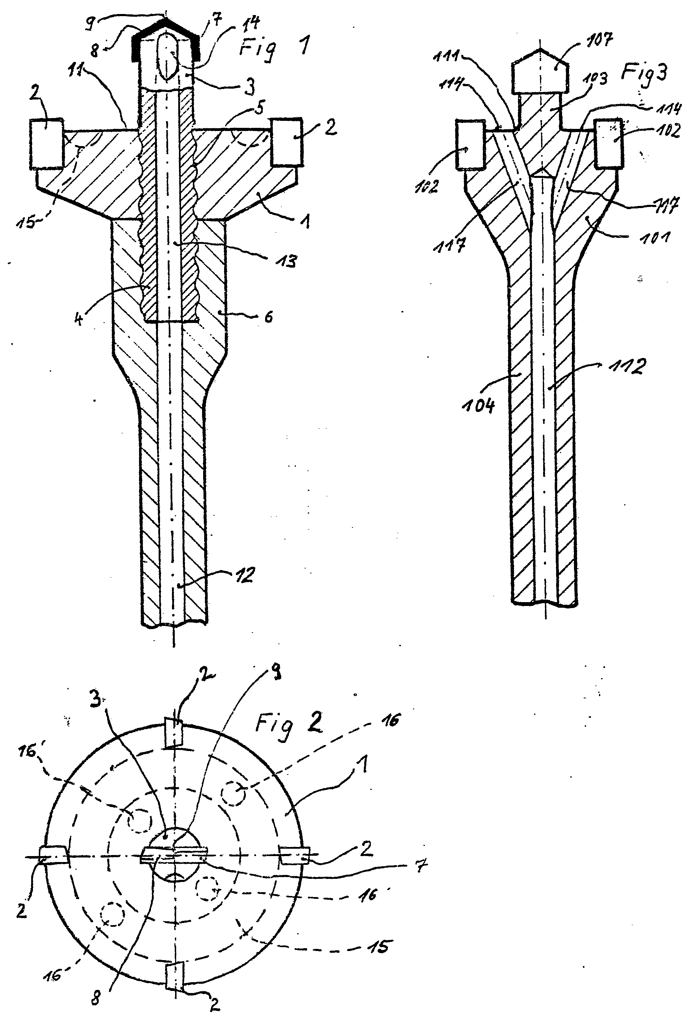

Das in den Figuren 1 und 2 dargestellte Ausführungsbeispiel eines Gesteinsbohrwerkzeuges weist einen Werkzeugkörper auf, der aus einem als kreisförmige Scheibe 1 gebildeten Träger für Schneidkörper 2 und einem Zentrierzapfen 3 besteht, dessen Schaft 4 ein Außengewinde 5 aufweist. Die Tragscheibe 1 ist mit einer zentralen Gewindebohrung für das Außengewinde 5 des Zentrierzapfens 3 versehen. Auf der den Schneidkörpern 2 abgekehrten Stirnseite der Trägerscheibe 1 ragt in zusammengeschraubtem Zustand der Schaft 4 heraus. Auf dieses herausragende Ende des Schaftes 4 ist ein Werkzeugschaft 6 aufgeschraubt. Am freien Ende des Zentrierzapfens 3 ist in einem Diametralschlitz ein Schneidkörper 7 befestigt, dessen Schneide 8 die Spitze 9 des Zentrierzapfens 3 bildet. Die der Spitze 9 zugekehrte Stirnfläche 11 des Trägerscheibe 1 ist eben. Die Schneidkörper 2 sind hierbei in einem radialen Abstand von dem Zentrierzapfen 3 angeordnet, so daß zwischen dem Schneidenkörper 7 des Zentrierzapfens und den Schneidkörpern 2 der Trägerscheibe 1 ein beim Bohren durch die Schneidwerkzeuge unbearbeiteter Teil frei bleibt, der von der ebenen Stirnfläche 11 durch die Schlagbewegung des Werkzeuges zertrümmert wird.

Der Werkzeugschaft 6 und der Zentrierzapfen 3 sind mit axialen Bohrungen 12 bzw. 13 versehen, die im zusammengeschraubten Zustand des Werkzeuges miteinander fluchten. Die Bohrung 13 des Zentrierzapfens ist als Sackbohrung ausgeführt und durch eine, in der Zeichnung nicht dargestellte Abzweigbohrung mit einer Mündungsöffnung, die am freien Ende des Zentrierzapfens 3 angeordnet ist, verbunden. Der aus der Stirnfläche 11 herausragende Teil des Zentrierzapfens 3 ist so lang, daß sich die Mündungsöffnung 14 in einem axialen Abstand vor den Schneiden der Schneidkörper 2 befindet. Dadurch wird erreicht, daß beim Bohren das der Stirnfläche 11 vorgelagerte Bohrmehl nur durch den Ringraum an die Mündungsöffnung 14 gelangen kann, der den Zentrierzapfen 3 beim Bohren umgibt. Dies schafft die Möglichkeit, ein Verstopfen der Mündungsöffnung 14 zu verhindern. Dies wird dadurch erreicht, daß der Schneidkörper 7 aus der zylindrischen Umfangsfläche des Zentrierzapfens 3 nur um eine in der radialen Richtung gemessene Länge herausragt, die kleiner ist als die größte lichte Weite der Mündungsöffnung 14 des Absaugkanals 12, 13. Die beim Bohren vor der Stirnfläche 11 zerkleinerten Partikel des Bohrmehls können also durch den Ringraum um den Zentrierzapfen 3 in die Mündungsöffnung 14 nur dann angesaugt werden, wenn sie so klein sind, daß sie die Mündungsöffnung 14 mit Sicherheit nicht mehr verstopfen können.

Der der Spitze 9 des Zentrierzapfens 3 benachbarte Teil der Trägerscheibe 1 ist, wie das aus Figur 1 ersichtlich ist, zylindrisch ausgebildet, so daß beim Bohren zwischen der zylindrischen Umfangsfläche der Trägerscheibe 1 und der Innenwand der vom Bohrwerkzeug erzeugten Bohrung ein Ringraum entsteht, dessen radiale Abmessung durch den radialen Überstand der Schneidkörper 2 über diese zylindrische Umfangsfläche genau definiert ist. Dadurch kann bei der Konstruktion des Werkzeuges vorgesehen werden, daß dieser Ringraum so eng ist, daß die durch die Mündungsöffnungen 7 angesaugte Luft im Ringraum eine so große Geschwindigkeit hat, daß auch beim Bohren nach oben mit Sicherheit vermieden werden kann, daß Bohrmehl durch den Ringraum nach unten fallen kann.

Dadurch, daß die Trägerscheibe 1 bei dem in Figur 1 dargestellten Ausführungsbeispiel nur von zwei ebenen Stirnflächen und je einer zylindrischen und kegelstumpfförmigen Umfangsfläche begrenzt ist, ist die Trägerscheibe mit einem außerordentlich geringen Arbeitsaufwand herstellbar. Hierbei kann die Ausbildung der Trägerscheibe auch noch durch Weglassung der kegelstumpfförmigen Umfangsfläche noch weiter vereinfacht werden, ohne das Werkzeug wesentlich zu beeinträchtigen.

Bei einer in den Figuren 1 und 2 gestrichelt angedeuteten Abwandlung dieses Ausführungsbeispieles ist in der in der Stirnansicht nach Figur 2 zwischen den Schneiden der Schneidkörper 2 und 9 freibleibenden Ringfläche eine umlaufende Nut 15 vorgesehen, in der zwei einander diametral gegenüberliegende Hartmetallzähne 16 oder Hartmetallstifte angeordnet sein können. Weitere Zähne 16′ können neben dem Zentrierzapfen 3 vorgesehen sein.

Bei dem in Figur 3 dargestellten Ausführungsbeispiel sind der Träger 101, der Zentrierzapfen 103 und der Werkzeugschaft 104 in einem Stück hergestellt. Die Schneidkörper 102 und 107 sind hierbei am Träger 101 bzw. an dem Zentrierzapfen 103 in der gleichen Weise befestigt wie beim vorher beschriebenen Ausführungsbeispiel. Der Absaugkanal besteht bei diesem Ausführungsbeispiel nur aus einer Sackbohrung 112, die durch den Werkzeugschaft 104 bis in den Träger 101 hineinragt und dort durch Abzweigbohrungen 117 mit Mündungsöffnungen 114 verbunden ist, die in der ebenen Stirnfläche 111 des Trägers 101 angeordnet sind. Damit diese Mündungsöffnungen 114 durch das Bohrmehl nicht verstopfen können, ist nicht nur der Überstand, um den der an der Spitze des Zentrierzapfens 103 befestigte Schneidkörper 107 aus der zylindrischen Umfangsfläche des Zentrierzapfens 103 herausragt, sondern auch der Überstand, um den die Schneiden der am Träger befestigten Schneidkörper 102 über der Stirnfläche 111 axial vorstehen, kleiner als die größte lichte Weite der Mündungsöffnungen 114.

**Patentansprüche**

1. Gesteinsbohrwerkzeug, dessen mit einem Werkzeugschaft (6, 104) verbundener Körper einen Zentrierzapfen (3, 103) mit einem an seinem freien Ende befestigten Schneidkörper (7, 107) und mindestens einen Träger (1, 101) für weitere Schneidkörper (2, 102) aufweist, die in axialem Abstand hinter der Spitze (9) des Zentrierzapfens (3, 103) um diesen herum so angeordnet sind, daß ihre radial äußeren Enden radial nach außen über den Träger (1, 101) vorstehen, dadurch gekennzeichnet, daß im Werkzeugkörper ein Absaugkanal (12, 13; 112, 117) zum Absaugen des Bohrmehls vorhanden ist und daß der Träger (1, 101) für die weiteren Schneidkörper (2; 102) eine der Spitze (9) des Zentrierzapfens (3, 103) zugekehrte kreisförmig begrenzte Stirnfläche (11, 111) aufweist.

2. Gesteinsbohrwerkzeug nach Anspruch 1, dadurch gekennzeichnet, daß die radial inneren Enden mindestens einiger Schneidkörper (2; 102) in radialem Abstand von den radial äußeren Enden des am freien Ende des Zentrierzapfens (3; 103) befestigten Schneidkörpers (7, 107) angeordnet sind.

3. Gesteinsbohrwerkzeug nach Anspruch 1 oder 2, dadurch gekennzeichnet, daß die Stirnfläche (11; 111) des Trägers (1; 101) im wesentlichen eben ist.

4. Gesteinsbohrwerkzeug nach einem der Ansprüche 1 bis 3, dadurch gekennzeichnet, daß in der Stirnfläche (11) des Trägers (1) zwischen dem Zentrierzapfen (3) und den Schneidkörpern (2) eine umlaufende Ringnut (15) vorhanden ist.

5. Gesteinsbohrwerkzeug nach einem der Ansprüche 1 bis 4, dadurch gekennzeichnet, daß mindestens eine den Absaugkanal (12, 13) mit der Bohrstelle verbindende Mündungsöffnung (14) des Absaugkanals sich im freien Ende des Zentrierzapfens (3) und in einem axialen Abstand vor den Schneiden der an dem Träger (1) befestigten Schneidenkörper (2) befindet und daß die Größte lichte Weite der an dem Träger (1) befestigten Schneidenkörper (2) befindet und daß die größte lichte Weite der Mündungsöffnung (14) größer ist als der Überstand, um den der an der Spitze (9) des Zentrierzapfens (3) befestigte Schneidkörper (7) aus einer zylindrischen Umfangsfläche des Zentrierzapfens herausragt.

6. Gesteinsbohrwerkzeug nach einem der Ansprüche 1 bis 5, dadurch gekennzeichnet, daß mindestens eine Mündungsöffnung (114) des Absaugkanals (112, 117) in der der Spitze des Zentrierzapfens (103) zugekehrten Stirnfläche (111) des Trägers (101) angeordnet ist und daß die größte lichte Weite dieser Mündungsöffnung (114) größer ist als der Überstand, um den die Schneiden der am Träger (101) befestigten Schneidkörper (102) über dessen Stirnfläche (111) vorstehen.

7. Gesteinsbohrwerkzeug nach einem der Ansprüche 1 bis 6, dadurch gekennzeichnet, daß mindestens der Teil des Trägers (1; 101), der der Spitze des Zentrierzapfens (3; 103) benachbart ist, zylindrisch ist.

8. Gesteinbohrwerkzeug nach einem der Ansprüche 1 bis 7, dadurch gekennzeichnet, daß der Träger als Scheibe (1) ausgebildet ist.

9. Gesteinsbohrwerkzeug nach Anspruch 8, dadurch gekennzeichnet, daß die Trägerscheibe (1) vorzugsweise durch Verschraubung lösbar mit dem Zentrierzapfen (3) vebunden ist.

10. Gesteinsbohrwerkzeug nach Anspruch 8 oder 9, dadurch gekennzeichnet, daß die Trägerscheibe (1) mittels des Zentrierzapfens (3) lösbar mit dem Werkzeugschaft (6) verbunden ist.

11. Gesteinsbohrwerkzeug nach Anspruch 10, dadurch gegekennzeichnet, daß am Zentrierzapfen ein Gewinde zum Aufschrauben der Trägerscheibe und des Werkzeugschaftes vorhanden ist.

**Claims**

1. A rock drilling tool, whose body is joined with a tool shaft (6, 104), has a positioning centre pin (3, 103) with a cutting bit fixed to its free end and has at least one support for further cutting bits (2, 102), which are placed axially spaced from and to the back of the end (9) of the positioning pin (3, 103) and are so placed round it as to have their radially outer ends running radially out past the support (1, 101) characterized in that an aspiration duct (12, 13; 112, 117) for clearing drilling waste is present in the tool body and in that the support (1, 101) has, for the further cutting bits (2; 102), an end face (11, 111) which is turned towards the end (9) of the positioning pin (3, 103) and has an outer circular edge limit.

2. A rock drilling tool as claimed in claim 1, characterized in that the radially inner ends of at least some of the cutting bits (2; 102) are positioned radially spaced from the radially outer end of the cutting bit (7, 107) fixed to the free end of the positioning pin (3; 103).

3. A rock drilling tool as claimed in claim 1 or claim 2, characterized in that the end face (11; 111) of the support (1; 101) is generally even.

4. A rock drilling tool as claimed in any one of claims 1 to 3, characterized by a ring groove (15) between the positioning pin (3) and the cutting bits (2), the groove being on the end face (11) of support (1).

5. A rock drilling tool as claimed in any one of claims 1 to 4, characterized in that at least one mouthpiece opening of the aspiration duct (12, 13), joining the duct with the end of the drill hole, is positioned in the free end of the positioning pin (3) so as to be axially spaced from, and in front of, the cutting edges of the cutting bits (2) fixed to the support (1) and in that the greatest inner breadth of the mouthpiece opening (14) is greater in size than the distance that the cutting bit (7) fixed to the end (9) of positioning pin (3) is let out past a cylindrical outer face of the positioning pin.

6. A rock drilling tool as claimed in any one of claims 1 to 5, characterized in that at least one mouthpiece opening (114) of the aspiration duct (112, 117) is present in the end face (111), turned towards the end of the positioning pin (103), of the support (101) and in that the greatest inner breadth of this mouthpiece opening (114) is greater in size than the distance by which the cutting edges of cutting bits (102) fixed to the support (101) are let out above its end face (111).

7. A rock drilling tool as claimed in any one of claims 1 to 6, characterized in that at least part of the support (1; 101), which is next to the positioning pin (3; 103), is cylindrical.

8. A rock drilling tool as claimed in any one of claims 1 to 7, characterized in that the support takes the form of a round plate (1).

9. A rock drilling tool as claimed in claim 8, characterized in that the round support plate (1) may be undone from the positioning pin and is preferably screwed thereto.

10. A rock drilling tool as claimed in claim 8 or claim 9, characterized in that the round support plate (1) is joined to the tool shaft (6) by way of the positioning pin (3).

11. A rock drilling tool as claimed in claim 10, characterized by a screw thread on the positioning pin for screwing the round support plate on the tool shaft.

**Revendications**

1. Outil de perçage de la pierre, dont le corps relié à une tige (6, 104) comporte un téton de centrage (3, 103) avec un élément de coupe (7, 107) fixé à son extrémité libre et au moins un support (1, 101) pour d'autres éléments de coupe (2, 102) qui sont disposés à une certaine distance axiale à l'arrière de la pointe (9) du téton (3, 103) et autour de celui-ci, de manière que leurs extrémités radialement extérieures dépassent le support (1, 101) radialement vers l'extérieur, outil caractérisé en ce qu'il comporte à l'intérieur du corps un canal d'aspiration (12, 13; 112, 117) pour aspirer la poussière de perçage, le support (1, 101) pour les autres éléments de coupe (2, 102) comportant une face frontale (11, 111) en forme de cercle tournée vers la pointe (9) du téton de centrage (3, 103).

2. Outil selon la revendication 1, caractérisé en ce que les extrémités intérieures radialement d'au moins certains éléments de coupe (2, 102) sont disposées à une certaine distance radiale des extrémités extérieures radialement de l'élément de coupe (7, 107) fixés à l'extrémité libre du téton de centrage (3, 103).

3. Outil selon la revendication 1 ou 2, caractérisé en ce que la face frontale (11, 111) du support (1, 101), est pratiquement plane.

4. Outil selon l'une quelconque des revendications 1 à 3, caractérisé en ce que la face frontale (11) du corps (1) comporte une rainure circonférencielle (15) entre le téton de centrage (3) et les éléments de coupe (2).

5. Outil selon l'une quelconque des revendications 1 à 4, caractérisé en ce que l'un au moins des orifices (14) reliant le canal d'aspiration (12, 13) avec le point de perçage se trouve à l'extrémité libre du téton de centrage (3) et à une certaine distance axiale devant les arêtes des éléments de coupe (2) fixés au support (1), le plus grand diamètre intérieur de l'orifice (14) étant supérieur à la distance dont l'élément de coupe (7) fixé à la pointe (9) du téton de centrage (3) fait saillie au delà d'une surface circonférencielle cylindrique du téton de centrage.

6. Outil selon l'une quelconque des revendications 1 à 5, caractérisé en ce que l'un au moins des orifices (114) du canal d'aspiration (112, 117) est situé sur la face frontale (111) du support (101) tournée vers la pointe du téton de centrage (103), le plus grand diamètre intérieur de cet orifice (114) étant supérieur à la distance dont les arêtes des éléments de coupe (102) fixés au support (101) font saillie au-dessus de la face frontale (111) de ce support.

7. Outil selon l'une quelconque des revendications 1 à 6, caractérisé en ce qu'au moins la partie du support (1, 101) voisine de la pointe du téton de centrage (3, 103) est cylindrique.

8. Outil selon l'une quelconque des revendications 1 à 7, caractérisé en ce que le support est réalisé sous la forme d'un disque (1).

9. Outil selon la revendication 8, caractérisé en ce que le disque support (1) est assemblé de façon amovible avec le téton de centrage (3), de préférence par vissage.

10. Outil selon la revendication 8 ou 9, caractérisé en ce que le disque support (1) est assemblé de façon amovible avec la tige (6) au moyen du téton de centrage (3).

11. Outil selon la revendication 10, caractérisé en ce que le téton de centrage comporte un filetage pour le vissage du disque support et de la tige.

0 003 816

Fig 1

Fig 3

Fig 2